# EUROPEAN PATENT SPECIFICATION

(11) **EP 3 778 322 B1**
(45) Date of publication and mention of the grant of the patent: **05.08.2026**
(21) Application number: 19785075.3
(22) Date of filing: 09.04.2019
(51) Int. Cl.: B60S 5/06, B65G 47/90, B66F 7/26, B66F 7/28, B60L 53/30, B60L 53/80

(54) **FLOATING DEVICE, BATTERY SWAPPING EQUIPMENT, AND BATTERY SWAPPING STATION**
SCHWIMMENDE VORRICHTUNG, BATTERIEWECHSELGERÄT UND BATTERIEWECHSELSTATION
DISPOSITIF FLOTTANT, ÉQUIPEMENT DE PERMUTATION DE BATTERIE ET STATION DE PERMUTATION DE BATTERIE

(30) Priority: 10.04.2018 CN 201810316738
(43) Date of publication of application: 17.02.2021
(73) Proprietor: NIO (ANHUI) HOLDING CO., LTD, Economic and Technological Development Zone Hefei Anhui 230601 (CN)
(72) Inventor: BENGTSSON, Jan, Anting, Jiading Shanghai (CN); LI, Nan, Anting, Jiading Shanghai (CN); TIAN, Xiaotao, Anting, Jiading Shanghai (CN); DING, Xikun, Anting, Jiading Shanghai (CN); LIU, Jun, Anting, Jiading Shanghai (CN); MA, Yongyue, Anting, Jiading Shanghai (CN)
(74) Representative: Patentanwaltskanzlei WILHELM & BECK
(86) International application number: PCT/CN2019/081961
(87) International publication number: WO 2019/196843

(56) References cited:
- WO-A1-2011/083219
- CN-A- 102 991 475
- CN-A- 106 829 407
- CN-A- 109 501 760
- CN-U- 203 047 214
- CN-U- 205 892 646
- CN-U- 206 231 369
- CN-U- 208 085 686
- US-A1- 2013 071 200

## Description

### Technical Field

The invention relates to the technical field of battery swapping for electric vehicles, and in particular to a floating device, a battery swap apparatus and a battery swap station.

### Background Art

With the popularization of electric vehicles, how to provide electric energy replenishment for an electric vehicle with insufficient electric power timely and efficiently has become a major concern for both manufacturers and vehicle owners. By means of the establishment of a battery swap station for battery swapping of the electric vehicle, i.e., directly swapping a used traction battery for a fresh traction battery, the replenishment of electric energy of the electric vehicle can be completed within a short time, so that battery swapping is a very efficient way for replenishing electric energy.

During the battery swapping process, the battery swap apparatus and a vehicle body need to be positioned, such that a fresh battery pack is aligned with an installation position, and during the alignment process, the position of the vehicle or the battery swap apparatus needs to be adjusted. However, when positioning and adjusting the vehicle or the battery swap apparatus, etc., there will inevitably be errors. In order to further fine-tune the positioning, the target object needs to be able to float freely, that is, a contact surface of the battery swap apparatus and the battery pack and a supporting surface in contact with the vehicle must be floatable, which is usually accomplished by a floating device. However, the existing floating devices have at least the following disadvantages:
(1) the floating ranges in different directions are different, and the floating range in each direction is quite small; and
(2) the floating device occupies a relatively high height in the vertical direction, which causes the entire floating device to occupy a relatively high installation height and takes up a large space, which limits the diversity of the layout of the entire battery swap station.

CN 206 231 369 U discloses a floating alignment device, which comprises a floating plate 12, a fixed plate 13 and a plurality of springs provided therebetween. Each of the springs is fixed at their ends to the floating plate 12 and the fixed plate 13, respectively. After the external force is removed (after the locating pin 21 disengages from the locating hole), the relative position between the floating plate 12 and the fixed plate 13 returns to the initial position determined by the preload force of the spring 4.

US 2013/071200 A1 relates to a positioning mechanism, used for positioning a material being transported, includes a loading assembly and a positioning assembly. The loading assembly includes a fixing member and a loading member movably fixed to the fixing member for loading the material. The positioning assembly includes a first engaging member mounted on the loading member, and a second engaging member engaged with the first engaging member. The second engaging member includes a mounting plate and a locking rod mounted on the mounting plate. The mounting plate is located beside a predetermined position. The first engaging member defines a connecting portion. The second engaging member includes a locking rod. The locking rod forms a latching end, and the latching end is tapered outwardly along the axis of the locking rod. The latching end engages with the connecting portion to position the loading member to the predetermined position.

CN 106 829 407 A is directed to a floating carrier comprises a floating plate, a jig base is connected to the floating plate in a floating manner, the floating plate is fixed to a fixing plate, the left side and the right side of the floating plate is provided with a pressing claw assembly, pressing claw assembly driving devices are installed on the fixing plate, guide through holes are formed in the floating plate, positioning holes are formed in the clamp base, and the guide through holes are flush with the positioning holes in an up-and-down direction.

### Summary of the Invention

The invention for which protection is sought is defined by the independent claim. The dependent claims concern particular embodiments.

The technical problem to be solved by the invention is to provide a floating device, a battery swap apparatus and a battery swap station device, which have a simple structure and a low occupied height, can float in any direction in a horizontal plane, and have a large floating range.

In order to achieve the above technical effects, according to one aspect of the invention, a floating device is provided, comprising:
a fixed base plate, a floating plate, suspension columns and connection parts, wherein
the fixed base plate and the floating plate are arranged face to face, and the floating plate is used to support a target object;
the floating plate is provided with at least one pair of suspension columns;
one end of each connection part is connected to the respective suspension column, and the other end thereof is connected to the fixed base plate; and
wherein the floating plate is floatable relative to the fixed base plate.

Further, one end of the suspension column is provided with a cross bar, and one end of the connection part is connected to the cross bar; and
the other end of the suspension column is fixedly connected to the floating plate.

Further, the connection part comprises a suspension chain, and a first floating connection structure and a second floating connection structure respectively located at two ends of the suspension chain, wherein
the first floating connection structure is connected to the cross bar, and the second floating connection structure is in floating contact with the floating plate; and
the suspension chain swings with the floating plate as the floating plate floats relative to the fixed base plate.

Further, the connection part further comprises a connection plate; a floating gap is provided between the fixed base plate and the floating plate; the connection plate is fixed in the floating gap, is arranged face to face with the fixed base plate and the floating plate, and is in contact with the fixed base plate and the floating plate; and the second floating connection structure is arranged in the connection plate.

Further, the first floating connection structure and second floating connection structure each comprise one or more universal ball structures, and the universal ball structures at the two ends of the suspension chain are arranged back to back and are respectively rotatably connected to the cross bar and the connection plate.

Further, the fixed base plate is provided with a snap groove corresponding to each of the connection plates on a one-to-one basis, and one end of the respective suspension chain passes through the snap groove and is connected to the second floating connection structure.

Further, the floating plate is a frame structure.

Further, the floating plate is provided with two pairs of suspension columns, and the two pairs of suspension columns are respectively arranged at trisection points of edges of the floating plate.

Further, the floating device further comprises one or more locking portions for locking the floating plate when the target object is adjusted to a target position.

According to a further aspect of the invention, a battery swap apparatus is provided, which comprises the floating device.

According to a yet further aspect of the invention, a battery swap station is provided, which comprises the battery swap apparatus.

The invention has obvious advantages and beneficial effects as compared with the prior art. By means of the above-mentioned technical solutions, the floating device, the battery swap apparatus and the battery swap station according to the invention can achieve considerable technical progress as well as practicality, and has an extensive application value in the industry, which has at least the following advantages:
the floating device described in the invention has a simple structure, a low installation height, and a small space occupied; and both ends of the connection part adopt a floating connection structure, such that the floating plate can float in any direction in a horizontal plane relative to the fixed base plate, and has a large floating range.

The description above is only summary of the technical solution of the present invention. In order to understand the technical means of the present invention more clearly for implementation according to the contents of the specification, and in order to make the above and other objectives, features and advantages of the present invention more apparent and easy to be understood, preferred embodiments are especially taken as examples in conjunction with the accompanying drawings, and the detailed description is as follows.

### Brief Description of the Drawings

Fig. 1 is a schematic view of a floating device provided according to an embodiment of the invention;
Fig. 2 is a partial cross-sectional view through A-A of Fig 1;
Fig. 3 is a perspective view of a connection part of the floating device provided according to an embodiment of the invention;
Fig. 4 is a cross-sectional view of a connection part of a floating device provided according to an embodiment of the invention;
Fig. 5 is a bottom view of a floating device provided according to an embodiment of the invention; and
Fig. 6 is a schematic view of a battery swap apparatus provided according to an embodiment of the invention.

### [Description of Symbols]

| | | | |
|---|---|---|---|
| 1: | Fixed base plate | 2: | Floating plate |
| 3: | Suspension column | 4: | Connection part |
| 31: | Cross bar | 41: | Suspension chain |
| 42: | First floating connection structure | 43: | Second floating connection structure |
| 44: | Connection plate | 5: | Floating gap |
| 11: | Snap groove | | |

### Detailed Description of Embodiments

In order to further illustrate the technical means used to achieve the intended purpose of the invention and the technical effects of the invention, the implementations of a floating device, a battery swap apparatus and a battery swap station proposed in the invention and the effects thereof are described in detail hereinafter in conjunction with the accompanying drawings and the preferred embodiments.

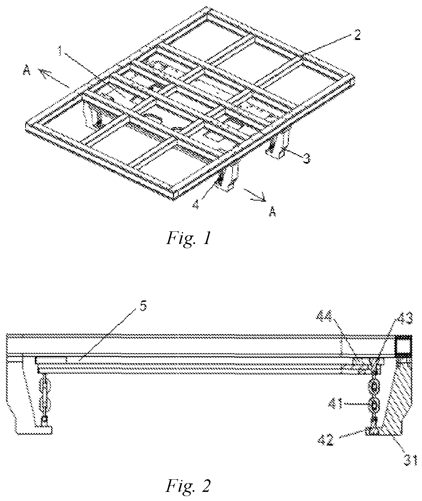

As shown in Fig. 1, a floating device comprises: a fixed base plate 1, a floating plate 2, suspension columns 3 and connection parts 4, wherein, the fixed base plate 1 and the floating plate 2 are arranged face to face, and the floating plate 2 is used to support a target object. The target object is an object to be aligned or positioned. For example, when the floating device is applied to a battery swap apparatus, such as a battery swap trolley, in a battery swap station, the target object is a battery pack. The floating plate 2 is provided with not less than one pair of suspension columns 3. As an example, each pair of suspension columns 3 may be arranged face to face on the floating plate 2 along edges of the fixed base plate 1. One end of the connection part 4 is connected to the suspension column 3, and the other end thereof is connected to the fixed base plate 1. The floating plate 2 can float relative to the fixed base plate 1. The floating device has a simple structure, a low installation height, and a small space occupied. The floating plate 2 can float in any direction in a horizontal plane relative to the fixed base plate 1, and has a large floating range.

When the target object on the floating plate 2 is not subjected to any external force or the target object is removed from the floating plate, the floating plate 2 will return to an initial position by its own weight to realize automatic restoring. When the next target object is placed on the floating plate 2 to float, the floating device will maintain the original floating amount.

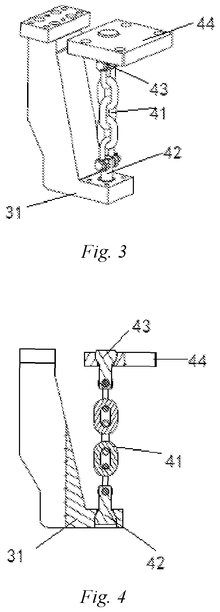

In the example as shown in Figs. 1 to 3, one end of the suspension column 3 is provided with a cross bar 31, the suspension column 3 is in the form of an L-shaped structure, and one end of the connection part 4 is connected to the cross bar 31. The other end of suspension column 3 is fixedly connected to the floating plate 2. Specifically, welding, riveting, bolts, etc. may be used for the fixed connection. The connection part 4 comprises a suspension chain 41, and a first floating connection structure 42 and a second floating connection structure 43 respectively located at two ends of the suspension chain 41, wherein the first floating connection structure 42 is connected to the cross bar 31, and the second floating connection structure 43 is in floating contact with the floating plate 2. The suspension chain 41 swings with the floating plate 2 as the floating plate floats relative to the fixed base plate 1. Since both ends of the suspension chain 41 are connected by means of a floating connection structure, the composition mechanisms of the connection part 3 can reduce the length of the connection part 2, thereby reducing the space occupied by the floating device. In addition, it can also be ensured that the floating plate 2 can float in any direction in a horizontal plane relative to the fixed base plate 1, and has a large floating range.

In order to prevent the direct contact between the fixed base plate 1 and the floating plate 2 resulting in a too large friction force and to further increase the floating range of the floating plate 2 relative to fixed base plate 1, a floating gap 5 is provided between the fixed base plate 1 and floating plate 2. The connection part 4 may further comprise a connection plate 44. The connection plate 44 is fixed in the floating gap 5. The connection plate 44 is arranged face to face with the fixed base plate 1 and floating plate 2, and an upper surface of the connection plate 44 is in contact with an upper surface of the fixed base plate 1, and a lower surface of the connection plate is in contact with a lower surface of the floating plate 2. It should be noted that, the second floating connection structure 43 is provided in the connection plate 44, the second floating structure 43 passes through the connection plate 44 and is in contact with the lower surface of the floating plate 2, thereby achieving the floating contact between the connection plate 4 and the floating plate 2, so that the floating plate 2 can float in any direction in the horizontal plane relative to the connection plate 2 and the fixed base plate 1. It should be noted that, this example is described with reference to the state in which the floating device is placed during use. In this case, the ground is taken as the bottom surface, the direction perpendicular to the ground is the vertical direction, and a component with a larger height from the ground is located above a component with a smaller height from the ground. In this example, the floating plate 2 is located above the connection plate 44, and the connection plate 44 is located above the fixed base plate 1. The terms "upper", "lower", "upper surface", "lower surface", etc. in this example are used to explain this example and are not limited to this.

The first floating connection structure 42 and the second floating connection structure 43 may each comprise one or more universal ball structures to achieve the floating connection. The universal ball structures at the two ends of the suspension chain 41 are arranged back to back, that is, the sections which are faced by the spherical surfaces of the universal ball structures at the two ends of the suspension chain 41 are arranged opposite to each other. The universal ball structure of the first floating connection structure 1 is rotatably connected to a cross bar 31, the universal ball structure of the second floating connection structure 43 is rotatably connected to the connection plate 44, the spherical surface of the universal ball structure of the second floating connection structure 43 passes through the connection plate 44 and comes into contact with the lower surface of the floating plate 2, and an upper surface of the floating plate 2 is used for placing the target object.

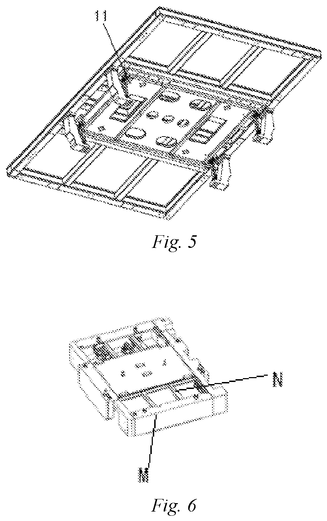

As an example, the fixed base plate 1 is provided with a snap groove 11 corresponding to each of the connection plates 44 on a one-to-one basis, for allowing the connection part 3 to pass through. The snap groove 11 may be a U-shaped groove, a square groove, etc., as long as the part of the connection part 3 that is located in the snap groove 11 can swing along with the floating of the floating plate 2. As shown in Fig. 5, one end of the suspension chain 41 passes through the snap groove 11 and is connected to the second floating connection structure 43, and the connection plate 44 is snap-fitted on the fixed base plate 1.

The structure of the floating plate 2 is not limited to the traditional solid platelike structure, but may also be provided as a frame structure, as shown in the embodiment of Figs 1 and 5, which can not only meet the requirements for the support of the target object, but can also reduce the weight of the floating device, reduce the materials required for manufacturing the floating device, and reduce the production cost.

The arrangement of the suspension columns 3 may be provided in the middle of the floating plate 2, as shown in the example of Figs 1 and 5. The floating plate 2 is provided with two pairs of suspension columns 3, and the two pairs of suspension columns 3 are respectively arranged at trisection points of the edges of the floating plate 2, which can reduce the area of the fixed base plate, reduce the production cost, and prevent other components of the battery swap apparatus where the floating device is located from interfering with the suspension columns 3. For example, the floating plate 2 has a rectangular structure, if the suspension columns 3 are distributed at the four vertices of the floating plate 2 and the battery swap apparatus is generally provided with positioning structures and other components at or near the positions, the interference and other phenomena then may occur to the positioning structures and other components. Therefore, the fact that the arrangement of the suspension columns 3 is provided in the middle of the floating plate 2 makes the design and layout of the battery swap apparatus and battery swap station more flexible.

In some examples, the floating device further comprises a locking portion (not shown in the figures). One or more locking portions may be provided for locking the floating plate 2 when the target object is adjusted to a target position, such that the floating plate 2 cannot move relative to the fixed base plate 1, so as to perform corresponding operations on the target object. For example, the floating device is arranged on the battery swap apparatus, and after the position of the battery pack is aligned with the battery swap position, the floating plate 2 is locked by the locking portion, and in turn the position of the battery pack is also fixed, and the battery swap operation can then be performed. The battery swapping precision and accuracy of the battery swap apparatus are increased by means of the device. As an example, the floating device may comprise four locking portions evenly distributed around the fixed base plate 1 in a circumferential direction so as to keep the floating plate 2 in a stable state during locking, to prevent slight movement of the target object and to improve the positioning and aligning accuracy of the target object to further improve the accuracy of the battery swap process.

The locking portion may be an electromagnetic brake attraction plate arranged above the floating plate 2. The brake attraction plate faces the fixed base plate 1, and the fixed base plate 1 serves as an attraction face of the brake attraction plate. The floating plate 2 is provided with a through hole corresponding to the brake attraction plate. During locking, the brake attraction plate passes through the through hole to attract the fixed base plate 1, so as to lock the floating plate 2. The electromagnetic brake attraction plate can be controlled to attract or release the fixed base plate 1 by means of powering on or off the electromagnetic brake attraction plate. In the released state, the locking portion may float along with the floating of the floating plate 2. The electromagnetic brake attraction plate may also be directly selected from the existing finished products, so the specific structural components thereof are not to be described in detail herein. It should be noted that the locking portion using the electromagnetic brake attraction plate is only one embodiment, and other locking portions may be used in other embodiments, as long as the floating plate 2 can be locked when the target object reaches a pre-set position.

The embodiment of the invention further provides a battery swap apparatus **M.** The battery swap apparatus **M** is a constituent part of the battery swap station, and is used to transport and swap a battery pack. For example, the battery swap apparatus may be a battery swap trolley. As shown in Fig. 6, the battery swap apparatus **M** may comprise the positioning device N described in the embodiment of the invention. During the battery swapping process, the battery pack is placed on the floating device **M.** If the battery pack position is inaccurate, the battery pack is pushed to drive the floating plate to float, thereby adjusting the position of the battery pack.

The embodiment of the invention further provides a battery swap station, which comprises one or more battery swap apparatuses **M** described in the embodiment of the invention.

The floating device described in the embodiment of the invention has a simple structure, a low installation height, and a small space occupied. Both ends of the connection part 4 adopt a floating connection structure, such that the floating plate 2 can float in any direction in a horizontal plane relative to the fixed base plate 1, and has a large floating range.

## Claims

1. A floating device comprising:
a fixed base plate (1), a floating plate (2), suspension columns (3) and connection parts (4), wherein
the fixed base plate (1) and the floating plate (2) are arranged face to face, and the floating plate (2) is used to support a target object;
the floating plate (2) is provided with at least one pair of suspension columns (3);
one end of each connection part (4) is connected to the respective suspension column (3), and the other end thereof is connected to the fixed base plate (1); and
wherein the floating plate (2) is floatable relative to the fixed base plate (1)
one end of the suspension column (3) is provided with a cross bar (31), and one end of the connection part (4) is connected to the cross bar (31) and the other end of the suspension column (3) is fixedly connected to the floating plate (2); and
the connection part (4) comprises a suspension chain (41), and a first floating connection structure (42) and a second floating connection structure (43) respectively located at two ends of the suspension chain (41), wherein the first floating connection structure (42) is connected to the cross bar (31), and the second floating connection structure (43) is in floating contact with the floating plate (2); and the suspension chain (41) swings with the floating plate (2) as the floating plate (2) floats relative to the fixed base plate (1);
the connection part (4) further comprises a connection plate (44); a floating gap (5) is provided between the fixed base plate (1) and the floating plate (2); the connection plate (44) is fixed in the floating gap (5), is arranged face to face with the fixed base plate (1) and the floating plate (2), and is in contact with the fixed base plate (1) and the floating plate (2); and the second floating connection structure (43) is arranged in the connection plate (44).

2. The floating device according to claim 1, **characterized in that**
the first floating connection structure (42) and second floating connection structure (43) each comprise one or more universal ball structures, and the universal ball structures at the two ends of the suspension chain (41) are arranged back to back and are respectively rotatably connected to the cross bar (31) and the connection plate (44).

3. The floating device according to any one of claims 1-2, **characterized in that**
the fixed base plate (1) is provided with a snap groove corresponding to each of the connection plates (44) on a one-to-one basis, and one end of the respective suspension chain (41) passes through the snap groove and is connected to the second floating connection structure (43).

4. The floating device according to any one of claims 1-2, **characterized in that** the floating plate (2) is a frame structure.

5. The floating device according to any one of claims 1-2, **characterized in that**
the floating plate (2) is provided with two pairs of suspension columns (3), and the two pairs of suspension columns (3) are respectively arranged at trisection points of edges of the floating plate (2).

6. The floating device according to any one of claims 1-2, **characterized in that**
the floating device further comprises one or more locking portions for locking the floating plate when the target object is adjusted to a target position.

7. A battery swap apparatus, **characterized by** comprising a floating device according to any one of claims 1-6.

8. A battery swap station, **characterized by** comprising a battery swap apparatus according to claim 7.

## Patentansprüche

1. Schwimmende Vorrichtung, Folgendes umfassend:
eine feste Grundplatte (1), eine Schwimmplatte (2), Aufhängungssäulen (3) und Verbindungsteile (4), wobei die feste Grundplatte (1) und die Schwimmplatte (2) einander zugewandt angeordnet sind und die Schwimmplatte (2) dazu verwendet wird, ein Zielobjekt zu tragen;
die Schwimmplatte (2) mit mindestens einem Paar Aufhängungssäulen (3) versehen ist;
ein Ende jedes Verbindungsteils (4) mit der jeweiligen Aufhängungssäule (3) verbunden ist und das andere Ende davon mit der festen Grundplatte (1) verbunden ist und wobei die Schwimmplatte (2) relativ zur festen Grundplatte (1) schwimmfähig ist, wobei ein Ende der Aufhängungssäule (3) mit einer Querstange (31) versehen ist und ein Ende des Verbindungsteils (4) mit der Querstange (31) verbunden ist und das andere Ende der Aufhängungssäule (3) fest mit der Schwimmplatte (2) verbunden ist und
der Verbindungsteil (4) eine Aufhängungskette (41) und eine erste schwimmende Verbindungsstruktur (42) und eine zweite schwimmende Verbindungsstruktur (43), die jeweils an zwei Enden der Aufhängungskette (41) angeordnet sind, umfasst, wobei die erste schwimmende Verbindungsstruktur (42) mit der Querstange (31) verbunden ist und die zweite schwimmende Verbindungsstruktur (43) in schwimmenden Kontakt mit der Schwimmplatte (2) ist und die Aufhängungskette (41) mit der Schwimmplatte (2) schwingt, wenn die Schwimmplatte (2) relativ zur festen Grundplatte (1) schwimmt;
der Verbindungsteil (4) ferner eine Verbindungsplatte (44) umfasst; wobei zwischen der festen Grundplatte (1) und der Schwimmplatte (2) ein Schwimmspalt (5) vorgesehen ist; wobei die Verbindungsplatte (44) im Schwimmspalt (5) fixiert ist, der festen Grundplatte (1) und der Schwimmplatte (2) zugewandt angeordnet ist und mit der festen Grundplatte (1) und der Schwimmplatte (2) in Kontakt steht und wobei die zweite schwimmende Verbindungsstruktur (43) in der Verbindungsplatte (44) angeordnet ist.

2. Schwimmende Vorrichtung nach Anspruch 1, **dadurch gekennzeichnet, dass**
die erste schwimmende Verbindungsstruktur (42) und die zweite schwimmende Verbindungsstruktur (43) jeweils eine oder mehrere Kugelkalottenstrukturen umfassen, und die Kugelkalottenstrukturen an den beiden Enden der Aufhängungskette (41) Rücken an Rücken angeordnet und jeweils drehbar mit der Querstange (31) und der Verbindungsplatte (44) verbunden sind.

3. Schwimmende Vorrichtung nach einem der Ansprüche 1-2, **dadurch gekennzeichnet, dass**
die feste Grundplatte (1) mit einer jeder der Verbindungsplatten (44) genau entsprechenden Einrastnut versehen ist, wobei ein Ende der jeweiligen Aufhängungskette (41) durch die Einrastnut verläuft und mit der zweiten schwimmenden Verbindungsstruktur (43) verbunden ist.

4. Schwimmende Vorrichtung nach einem der Ansprüche 1-2, **dadurch gekennzeichnet, dass** die Schwimmplatte (2) eine Rahmenstruktur ist.

5. Schwimmende Vorrichtung nach einem der Ansprüche 1-2, **dadurch gekennzeichnet, dass**
die Schwimmplatte (2) mit zwei Paaren Aufhängungssäulen (3) versehen ist und die beiden Paare Aufhängungssäulen (3) jeweils an Dreiteilungspunkten von Kanten der Schwimmplatte (2) angeordnet sind.

6. Schwimmende Vorrichtung nach einem der Ansprüche 1-2, **dadurch gekennzeichnet, dass**
die schwimmende Vorrichtung ferner einen oder mehrere Verriegelungsabschnitte zum Verriegeln der Schwimmplatte, wenn das Zielobjekt auf eine Zielposition eingestellt wird, umfasst.

7. Batteriewechseleinrichtung, **dadurch gekennzeichnet, dass** sie eine schwimmende Vorrichtung nach einem der Ansprüche 1-6 umfasst.

8. Batteriewechselstation, **dadurch gekennzeichnet, dass** sie eine Batteriewechselvorrichtung nach Anspruch 7 umfasst.

## Revendications

1. Dispositif flottant comprenant :
une plaque de base fixe (1), une plaque flottante (2), des colonnes de suspension (3) et des parties de raccordement (4),
la plaque de base fixe (1) et la plaque flottante (2) étant agencées face à face, et la plaque flottante (2) étant utilisée pour supporter un objet cible ;
la plaque flottante (2) étant pourvue d'au moins une paire de colonnes de suspension (3) ;
une extrémité de chaque partie de raccordement (4) étant raccordée à la colonne de suspension respective (3), et l'autre extrémité de celle-ci étant raccordée à la plaque de base fixe (1) ; et
la plaque flottante (2) pouvant flotter par rapport à la plaque de base fixe (1), une extrémité de la colonne de suspension (3) étant pourvue d'une barre transversale (31), et une extrémité de la partie de raccordement (4) étant raccordée à la barre transversale (31) et l'autre extrémité de la colonne de suspension (3) étant raccordée fixement à la plaque flottante (2) ; et
la partie de raccordement (4) comprenant une chaîne de suspension (41), et une première structure de raccordement flottante (42) et une deuxième structure de raccordement flottante (43) situées respectivement aux deux extrémités de la chaîne de suspension (41), la première structure de raccordement flottante (42) étant raccordée à la barre transversale (31) et la deuxième structure de raccordement flottante (43) étant en contact flottant avec la plaque flottante (2) ; et la chaîne de suspension (41) basculant avec la plaque flottante (2) lorsque la plaque flottante (2) flotte par rapport à la plaque de base fixe (1) ;
la partie de raccordement (4) comprenant en outre une plaque de raccordement (44) ; un intervalle flottant (5) étant prévu entre la plaque de base fixe (1) et la plaque flottante (2) ; la plaque de raccordement (44) étant fixée dans l'intervalle flottant (5), étant agencée face à face avec la plaque de base fixe (1) et la plaque flottante (2), et étant en contact avec la plaque de base fixe (1) et la plaque flottante (2) ; et la deuxième structure de raccordement flottante (43) étant agencée dans la plaque de raccordement (44).

2. Dispositif flottant selon la revendication 1, **caractérisé en ce que**
la première structure de raccordement flottante (42) et la deuxième structure de raccordement flottante (43) comprennent chacune une ou plusieurs structures à billes universelles, et les structures à billes universelles aux deux extrémités de la chaîne de suspension (41) sont agencées dos à dos et sont respectivement raccordées en rotation à la barre transversale (31) et à la plaque de raccordement (44).

3. Dispositif flottant selon l'une quelconque des revendications 1 et 2, **caractérisé en ce que** la plaque de base fixe (1) est pourvue d'une rainure d'encliquetage correspondant à chacune des plaques de raccordement (44) sur une base individuelle, et une extrémité de la chaîne de suspension respective (41) traversant la rainure d'encliquetage et est raccordée à la deuxième structure de raccordement flottante (43).

4. Dispositif flottant selon l'une quelconque des revendications 1 et 2, **caractérisé en ce que** la plaque flottante (2) est une structure de cadre.

5. Dispositif flottant selon l'une quelconque des revendications 1 et 2, **caractérisé en ce que** la plaque flottante (2) est pourvue de deux paires de colonnes de suspension (3), et les deux paires de colonnes de suspension (3) sont agencées respectivement au niveau de points de trisection des bords de la plaque flottante (2).

6. Dispositif flottant selon l'une quelconque des revendications 1 et 2, **caractérisé en ce que** le dispositif flottant comprend en outre une ou plusieurs parties de verrouillage permettant de verrouiller la plaque flottante lorsque l'objet cible est réglé sur une position cible.

7. Appareil d'échange de batterie, **caractérisé en ce qu'**il comprend un dispositif flottant selon l'une quelconque des revendications 1 à **6.**

8. Poste d'échange de batterie, **caractérisé en ce qu'**il comprend un appareil d'échange de batterie selon la revendication **7.**
